# EUROPEAN PATENT APPLICATION

(11) **EP 4 503 720 A1**
(43) Date of publication of application: **05.02.2025**
(21) Application number: 23773800.0
(22) Date of filing: 20.03.2023
(51) Int. Cl.: H04W 28/02

(54) **METHOD FOR NEGOTIATING UNAVAILABLE PERIOD OF TERMINAL, TERMINAL, AND NETWORK SIDE DEVICE**

(30) Priority: 25.03.2022 CN 202210307869; 28.03.2022 CN 202210317284
(71) Applicant: Vivo Mobile Communication Co., Ltd., Dongguan, Guangdong 523863 (CN)
(72) Inventor: LI, Huan, Dongguan, Guangdong 523863 (CN)
(74) Representative: Shieldmark
(86) International application number: PCT/CN2023/082554
(87) International publication number: WO 2023/179553

(57) **Abstract**

This application discloses a method for negotiating an unavailability period of a terminal, a terminal, and a network-side device, and relates to the field of communication technologies. In embodiments of this application, the method for negotiating the unavailability period of the terminal includes: determining first information by the terminal, where the first information includes unavailability time window information of the terminal, and the unavailability time window information indicates time during which the terminal is unable to connect to a network; and transmitting the first information by the terminal to a network-side device, where the first information is for determining a control policy of an application of the terminal.

## Description

### CROSS-REFERENCE TO RELATED APPLICATIONS

This application claims priority to Chinese Patent Application No. 2022103078695, filed on March 25, 2022 and entitled "METHOD FOR NEGOTIATING UNAVAILABILITY PERIOD OF TERMINAL, TERMINAL, AND NETWORK-SIDE DEVICE", and to Chinese Patent Application No. 2022103172841, filed on March 28, 2022 and entitled "METHOD FOR NEGOTIATING UNAVAILABILITY PERIOD OF TERMINAL, TERMINAL, AND NETWORK-SIDE DEVICE", both of which are incorporated herein by reference in their entireties.

### TECHNICAL FIELD

This application relates to the field of communication technologies, and specifically, to a method for negotiating an unavailability period of a terminal, a terminal, and a network-side device.

### BACKGROUND

When a terminal needs to reboot due to poor coverage, operating system upgrading, or other reasons, the terminal may be temporarily disconnected from a network. The terminal may be "unavailable" for the network. During this period, the UE cannot perform important operations, which may affect normal operation of network services. For example, if the network assigns the UE to perform an important operation, but during which the UE enters a system reboot state, the important operation fails, and a relevant service cannot be completed.

### SUMMARY

Embodiments of this application provide a method for negotiating an unavailability period of a terminal, which can resolve the problem that an operation such as a control command delivered by a network-side device to the terminal fails when the terminal needs to reboot for various reasons.

According to a first aspect, a method for negotiating an unavailability period of a terminal is provided and is applied to a terminal. The method includes:
determining first information by the terminal, where the first information includes unavailability time window information of the terminal, and the unavailability time window information indicates time during which the terminal is unable to connect to a network; and
transmitting the first information by the terminal to a network-side device, where the first information is for determining a control policy of an application of the terminal.

According to a second aspect, a method for negotiating an unavailability period of a terminal is provided and is applied to a Policy Control Function. The method includes:
obtaining first information by a Policy Control Function, where the first information includes unavailability time window information of the terminal, and the unavailability time window information of the terminal indicates time during which the terminal is unable to connect to a network; and
determining a control policy of an application of the terminal by the Policy Control Function based on the first information.

According to a third aspect, a method for negotiating an unavailability period of a terminal is provided and is applied to a unified data repository. The method includes:
obtaining first information by a unified data repository, where the first information includes unavailability time window information of the terminal, and the unavailability time window information of the terminal indicates time during which the terminal is unable to connect to a network; and
transmitting the first information by the unified data repository to a Policy Control Function, where the first information is for determining a control policy of an application of the terminal.

According to a fourth aspect, a method for negotiating an unavailability period of a terminal is provided and is applied to an Application Function. The method includes:
transmitting a policy negotiation request message by an Application Function to a Policy Control Function, where the policy negotiation request message is for requesting a control policy of an application, and the policy negotiation request message includes service description information; and
receiving the control policy by the Application Function, where the control policy includes recommended time window information for data transmission of the application of the Application Function.

According to a fifth aspect, an apparatus for negotiating an unavailability period of a terminal is provided and includes:
a first determining unit, configured to determine first information, where the first information includes unavailability time window information of the terminal, and the unavailability time window information indicates time during which the terminal is unable to connect to a network; and
a first transmitting unit, configured to transmit the first information to a network-side device, where the first information is for determining a control policy of an application of the terminal.

According to a sixth aspect, an apparatus for negotiating an unavailability period of a terminal is provided and includes:
a first obtaining unit, configured to obtain first information, where the first information includes unavailability time window information of the terminal, and the unavailability time window information of the terminal indicates time during which the terminal is unable to connect to a network; and
a second determining unit, configured to determine a control policy of an application of the terminal based on the first information.

According to a seventh aspect, an apparatus for negotiating an unavailability period of a terminal is provided and includes:
a second obtaining unit, configured to obtain first information, where the first information includes unavailability time window information of the terminal, and the unavailability time window information of the terminal indicates time during which the terminal is unable to connect to a network; and
a third transmitting unit, configured to transmit the first information to a Policy Control Function, where the first information is for determining a control policy of an application of the terminal.

According to an eighth aspect, an apparatus for negotiating an unavailability period of a terminal is provided and includes:
a fourth transmitting unit, configured to transmit a policy negotiation request message to a Policy Control Function, where the policy negotiation request message is for requesting a control policy of an application, and the policy negotiation request message includes service description information; and
a second receiving unit, configured to receive the control policy, where the control policy includes recommended time window information for data transmission of the application of the Application Function.

According to a ninth aspect, a terminal is provided. The terminal includes a processor and a memory. The memory stores a program or instructions capable of running on the processor. The program or instructions are executed by the processor to implement steps of the method for negotiating the unavailability period of the terminal according to the first aspect.

According to a tenth aspect, a terminal is provided and includes a processor and a communication interface. The processor is configured to determine first information, where the first information includes unavailability time window information of the terminal, and the unavailability time window information indicates time during which the terminal is unable to connect to a network. The communication interface is configured to transmit the first information to a network-side device, where the first information is for determining a control policy of an application of the terminal.

According to an eleventh aspect, a network-side device is provided. The network-side device includes a processor and a memory. The memory stores a program or instructions capable of running on the processor. The program or instructions are executed by the processor to implement steps of the method for negotiating the unavailability period of the terminal according to the second aspect, or to implement steps of the method for negotiating the unavailability period of the terminal according to the third aspect, or to implement steps of the method for negotiating the unavailability period of the terminal according to the fourth aspect.

According to a twelfth aspect, a network-side device is provided and includes a processor and a communication interface. The communication interface is configured to obtain first information, where the first information includes unavailability time window information of the terminal, and the unavailability time window information of the terminal indicates time during which the terminal is unable to connect to a network. The processor is configured to determine a control policy of an application of the terminal based on the first information.

Alternatively, the communication interface is configured to obtain first information, where the first information includes unavailability time window information of the terminal, and the unavailability time window information of the terminal indicates time during which the terminal is unable to connect to a network. The communication interface is further configured to transmit the first information to a Policy Control Function, where the first information is for determining a control policy of an application of the terminal.

Alternatively, the communication interface is configured to transmit a policy negotiation request message to a Policy Control Function, where the policy negotiation request message is for requesting a control policy of an application, and the policy negotiation request message includes service description information. The communication interface is further configured to receive the control policy, where the control policy includes recommended time window information for data transmission of the application of the Application Function.

According to a thirteenth aspect, a communication system is provided and includes: a terminal and a network-side device. The terminal may be configured to perform steps of the method for negotiating the unavailability period of the terminal according to the first aspect. The network-side device may be configured to perform steps of the method for negotiating the unavailability period of the terminal according to the second aspect, or steps of the method for negotiating the unavailability period of the terminal according to the third aspect, or steps of the method for negotiating the unavailability period of the terminal according to the fourth aspect.

According to a fourteenth aspect, a readable storage medium is provided. The readable storage medium stores a program or instructions. The program or instructions are executed by a processor to implement steps of the method for negotiating the unavailability period of the terminal according to the first aspect, or to implement steps of the method for negotiating the unavailability period of the terminal according to the second aspect, or to implement steps of the method for negotiating the unavailability period of the terminal according to the third aspect, or to implement steps of the method for negotiating the unavailability period of the terminal according to the fourth aspect.

According to a fifteenth aspect, a chip is provided. The chip includes a processor and a communication interface. The communication interface is coupled to the processor. The processor is configured to run a program or instructions to implement the method for negotiating the unavailability period of the terminal according to the first aspect, or to implement the method for negotiating the unavailability period of the terminal according to the second aspect, or to implement the method for negotiating the unavailability period of the terminal according to the third aspect, or to implement the method for negotiating the unavailability period of the terminal according to the fourth aspect.

According to a sixteenth aspect, a computer program/program product is provided. The computer program/program product is stored in a storage medium. The computer program/program product is executed by at least one processor to implement steps of the method for negotiating the unavailability period of the terminal according to the first aspect, or to implement steps of the method for negotiating the unavailability period of the terminal according to the second aspect, or to implement steps of the method for negotiating the unavailability period of the terminal according to the third aspect, or to implement steps of the method for negotiating the unavailability period of the terminal according to the fourth aspect.

In the embodiments of this application, through the negotiation among the terminal, the network, and the application, the conflict between service data transmission of the terminal and the unavailability period of the terminal is avoided, thereby ensuring the normal operation of network services.

### BRIEF DESCRIPTION OF THE DRAWINGS

FIG. 1 is a block diagram of a wireless communication system to which the embodiments of this application are applicable;
FIG. 2 is a schematic flowchart 1 of a method for negotiating an unavailability period of a terminal according to an embodiment of this application;
FIG. 3 is a schematic interaction diagram 1 of a method for negotiating an unavailability period of a terminal according to an embodiment of this application;
FIG. 4 is a schematic interaction diagram 2 of a method for negotiating an unavailability period of a terminal according to an embodiment of this application;
FIG. 5 is a schematic interaction diagram 3 of a method for negotiating an unavailability period of a terminal according to an embodiment of this application;
FIG. 6 is a schematic interaction diagram 4 of a method for negotiating an unavailability period of a terminal according to an embodiment of this application;
FIG. 7 is a schematic flowchart 2 of a method for negotiating an unavailability period of a terminal according to an embodiment of this application;
FIG. 8 is a schematic flowchart 3 of a method for negotiating an unavailability period of a terminal according to an embodiment of this application;
FIG. 9 is a schematic flowchart 4 of a method for negotiating an unavailability period of a terminal according to an embodiment of this application;
FIG. 10 is a schematic interaction diagram 5 of a method for negotiating an unavailability period of a terminal according to an embodiment of this application;
FIG. 11 is a schematic diagram 1 of a structure of an apparatus for negotiating an unavailability period of a terminal according to an embodiment of this application;
FIG. 12 is a schematic diagram 2 of a structure of an apparatus for negotiating an unavailability period of a terminal according to an embodiment of this application;
FIG. 13 is a schematic diagram 3 of a structure of an apparatus for negotiating an unavailability period of a terminal according to an embodiment of this application;
FIG. 14 is a schematic diagram 4 of a structure of an apparatus for negotiating an unavailability period of a terminal according to an embodiment of this application;
FIG. 15 is a schematic diagram of a structure of a communication device according to an embodiment of this application;
FIG. 16 is a schematic diagram of a hardware structure of a terminal according to an embodiment of this application; and
FIG. 17 is a schematic diagram of a structure of a network-side device according to an embodiment of this application.

### DETAILED DESCRIPTION

The technical solutions in the embodiments of this application are clearly described in the following with reference to the accompanying drawings in the embodiments of this application. Apparently, the described embodiments are merely some rather than all of the embodiments of this application. All other embodiments obtained by a person of ordinary skill in the art based on the embodiments of this application fall within the protection scope of this application.

In the specification and claims of this application, the terms "first", "second", and the like are intended to distinguish between similar objects, but are not intended to describe a specific sequence or order. It should be understood that the terms used in this way are interchangeable in a proper case, so that the embodiments of this application can be implemented in an order other than the order shown or described herein. In addition, the objects distinguished by using "first" and "second" are usually of the same type, and a quantity of the objects is not limited, for example, there may be one or more first objects. In addition, "and/or" in the specification and claims indicates at least one of the connected objects, and the character "/" usually indicates an "or" relationship between the associated objects.

It is to be noted that the techniques described in the embodiments of this application are not limited to a long-term evolution (Long Term Evolution, LTE)/LTE-advanced (LTE-Advanced, LTE-A) system, and may be further applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technique may be applied to the systems and radio techniques mentioned above, and may also be applied to other systems and radio techniques. The following describes a new radio (New Radio, NR) system for the exemplary purpose and uses NR terminology throughout most of the following description, but these techniques may also be applied to a system other than the NR system, for example, the 6^{th} generation (6^{th} Generation, 6G) communication system.

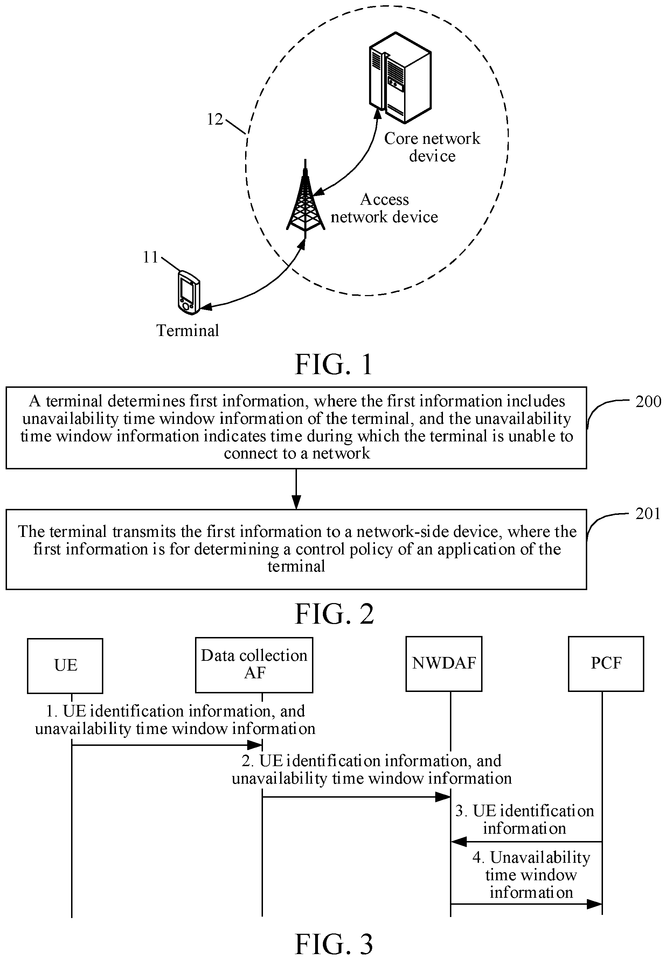

FIG. 1 is a block diagram of a wireless communication system to which the embodiments of this application are applicable. The wireless communication system includes a terminal 11 and a network-side device 12. The terminal 11 may be a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, such as a refrigerator, a television, a washing machine, or furniture), a game console, a personal computer (personal computer, PC), a teller machine, a self-service machine, or another terminal-side device. The wearable device includes: a smartwatch, a smart band, smart headphones, smart glasses, smart jewelry (a smart bangle, a smart bracelet, a smart ring, a smart necklace, a smart anklet, and a smart ankle chain), a smart wristband, smart clothing, and the like. It needs to be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as NodeB, evolved NodeB (eNB), an access point, a base transceiver station (Base Transceiver Station, BTS), a radio base station, a radio transceiver, a basic service set (Basic Service Set, BSS), an extended service set (Extended Service Set, ESS), home NodeB, home evolved NodeB, a transmitting receiving point (Transmitting Receiving Point, TRP), or another proper term in the field. The base station is not limited to a specific technical term as long as the same technical effect is achieved. It needs to be noted that only a base station in the NR system is used as an example for description in the embodiments of this application, but a specific type of the base station is not limited. The core network device may include, but is not limited to, at least one of the following: a core network node, a core network function, a mobility management entity (Mobility Management Entity, MME), an Access and Mobility Management Function (Access and Mobility Management Function, AMF), a Session Management Function (Session Management Function, SMF), a User Plane Function (User Plane Function, UPF), a Policy Control Function (Policy Control Function, PCF), a Policy and Charging Rules Function (Policy and Charging Rules Function, PCRF), an Edge Application Server Discovery Function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a Network Repository Function (Network Repository Function, NRF), a Network Exposure Function (Network Exposure Function, NEF), a local NEF (Local NEF or L-NEF), a Binding Support Function (Binding Support Function, BSF), and an Application Function (Application Function, AF). It needs to be noted that only a core network device in the NR system is used as an example for description in the embodiments of this application, but a specific type of the core network device is not limited.

The following describes in detail a method for negotiating an unavailability period of a terminal provided in the embodiments of this application through some embodiments and application scenarios thereof with reference to the accompanying drawings.

FIG. 2 is a schematic flowchart 1 of a method for negotiating an unavailability period of a terminal according to an embodiment of this application. As shown in FIG. 2, the method includes the following steps:
Step 200: The terminal determines first information, where the first information includes unavailability time window information of the terminal.

The unavailability time window information indicates time during which the terminal is unable to connect to a network. For example, when UE performs a reboot operation or a deregistration operation, or is disconnected from a network, the terminal cannot connect to the network.

Time window information may include at least one of the following: a start time point, duration, start time, and end time.

Optionally, the unavailability time window information includes at least one of the following:
a start time point at which the terminal is unable to connect to the network and duration in which the terminal is unable to connect to the network;
a start time point at which the terminal is unable to connect to the network and an end time point at which the terminal is unable to connect to the network; and
identification information of the terminal corresponding to the unavailability time window information.

Optionally, the first information further includes the identification information of the terminal corresponding to the unavailability time window information.

The identification information of the terminal may include at least one of the following: an external group identifier (External Group Identifier, EGI), an internal group identifier (Internal Group ID, IGI), IMSI, SUCI, SUPI, a MAC address, GPSI, PEI, and an IP address.

Step 201: The terminal transmits the first information to a network-side device, where the first information is for determining a control policy of an application of the terminal.

It may be understood that the terminal UE determines its own unavailability time window information and transmits the unavailability time window information of the UE to the network-side device, for the network-side device to determine the control policy of the application of the UE based on the unavailability time window information of the UE.

Optionally, when the network-side device determines that an existing control policy of the application of the UE conflicts with the unavailability time window information of the UE, the network-side device may modify the conflicting existing control policy of the application and notify an Application Function to update the control policy, or notify the UE to modify the unavailability time window information of the UE.

In this embodiment of this application, the terminal determines its own unavailability time window information and transmits the unavailability time window information to the network-side device, so that the network-side device can determine the control policy of the application of the terminal based on the unavailability time window information. Through the negotiation among the terminal, the network, and the application, the conflict between service data transmission of the terminal and the unavailability period of the terminal is avoided, thereby ensuring the normal operation of network services.

In some optional embodiments, that the terminal transmits the first information to the network-side device includes at least one of the following:
Manner 1: Transmit the first information to a Data Collection Application Function.

For an interaction process involved in Manner 1, refer to a schematic interaction diagram 1 of a method for negotiating an unavailability period of a terminal shown in FIG. 3.

As shown in FIG. 3, the method for negotiating the unavailability period of the terminal includes the following steps:
Step 1: The terminal transmits the unavailability time window information of the terminal to the Data Collection (Data Collection) Application Function (Application Function, AF).

The Data Collection AF is a network element for collecting data of the UE.

The terminal may actively report the unavailability time window information of the terminal to the Data Collection AF, or may report the unavailability time window information of the terminal after the Data Collection AF subscribes to or requests the unavailability time window information from the terminal.

Step 2: The Data Collection AF transmits the unavailability time window information of the terminal to a Network Data Analytics Function (Network Data Analytics Function, NWDAF).

For example, the Data Collection AF may transmit the unavailability time window information of the terminal to the NWDAF by using an Naf_EventExposure_Notify message.

Optionally, previously, the NWDAF may subscribe to the unavailability time window information of the terminal from the Data Collection AF by using Naf_EventExposure_Subscribe.

Step 3: A PCF queries the unavailability time window information of the UE from the NWDAF.

Optionally, the Policy Control Function (Policy Control Function, PCF) transmits a first request message to the NWDAF, where the first request message includes identification information of the terminal for querying the unavailability time window information of the terminal.

Optionally, the first request message further includes: unavailability time window indication information, where the unavailability time window indication information indicates querying the unavailability time window information of the terminal.

For example, the first request message is an Nnwdaf_AnalyticsSubscription_Subscribe message.

Step 4: The NWDAF transmits the unavailability time window information of the UE to the PCF.

Further, the NWDAF transmits a first request response message to the PCF, where the first request response message includes the unavailability time window information of the terminal identified by the identification information. For example, the first request response message is an Nnwdaf_AnalyticsSubscription_Notify message.

It needs to be noted that the PCF may alternatively query availability time window information of the terminal from the NWDAF. Correspondingly, the NWDAF transmits the availability time window information of the terminal to the PCF.

For example, the NWDAF may determine the availability time window information of the terminal based on the unavailability time window information of the terminal transmitted by the Data Collection AF. The PCF may alternatively determine the availability time window information of the terminal based on the received unavailability time window information of the terminal.

Step 3 and step 4 are optional.

The identification information of the terminal may not be carried in the unavailability time window information of the terminal, but carried in a message. The identification information of the terminal may be an explicit parameter or an implicit parameter in the message. For example, the UE transmits the unavailability time window information of the UE to the AF through a connection channel between the UE and the AF. The AF may learn, through the connection, that the unavailability time window information is information that belongs to the UE corresponding to the connection channel. For example, the UE transmits the unavailability time window information to the AF through a PDU session. The AF learns the UE corresponding to the unavailability time window information through an IP address of the terminal or the PDU session. The identification information of the UE transmitted between network elements may be indicated by the connection channel corresponding to the UE between the network elements. In this case, there is no need to transmit an explicit UE identification information parameter.

A sequence of performing step 1 to step 4 is not limited. For example, the PCF may subscribe to the unavailability time window information from the NWDAF, the NWDAF subscribes to or requests the unavailability time window information from the AF, the AF transmits the information reported by the UE to the NWDAF, and the NWDAF then transmits the information to the PCF.

Manner 2: Transmit the first information to an Access and Mobility Management Function.

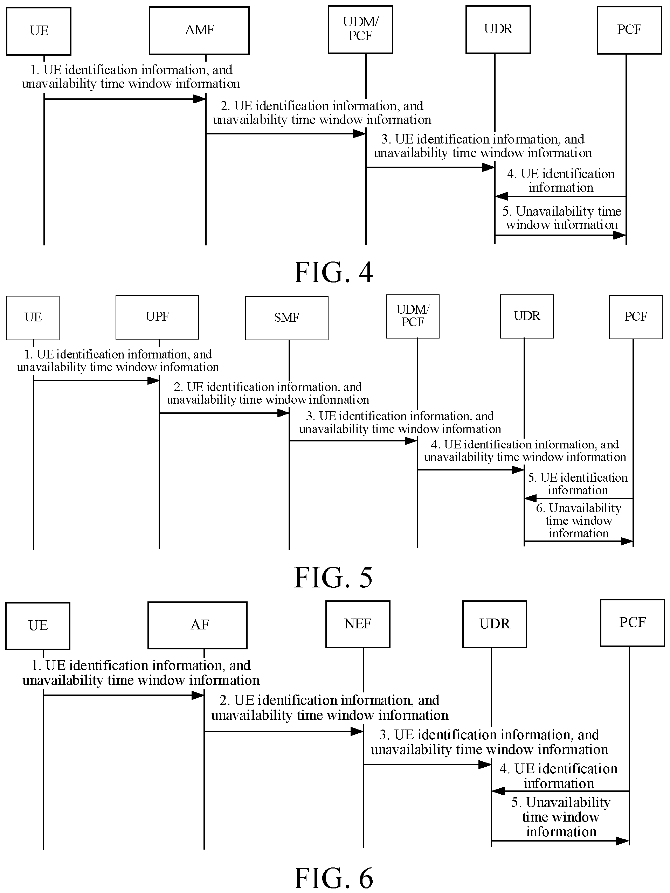

For an interaction process involved in Manner 2, refer to a schematic interaction diagram 2 of a method for negotiating an unavailability period of a terminal shown in FIG. 4. As shown in FIG. 4, the method for negotiating the unavailability period of the terminal includes the following steps:
Step 1: The UE transmits the unavailability time window information of the UE to the AMF.

The terminal transmits the unavailability time window information of the UE to the Access and Mobility Management Function (Access and Mobility Management Function, AMF).

For the unavailability time window information of the UE, refer to the foregoing description. Details are not described herein.

A NAS message used specifically for the UE to transmit the unavailability time window information of the UE to the AMF is not limited in the embodiments of this application.

Step 2: The AMF transmits the unavailability time window information of the UE to UDM or PCF1.

After the AMF receives the unavailability time window information of the UE, the AMF transmits the unavailability time window information of the UE to the unified data management (Unified Data Management, UDM) or the Policy Control Function (Policy Control Function) PCF1.

For example, the AMF transmits, to the UDM, an Nudm_UECM_Registration or Nudm_SDM_Get request that carries the unavailability time window information of the UE.

For example, the AMF includes the unavailability time window information of the UE in an AM Policy Association establishment or modification request. For example, the AMF transmits, to the PCF1, an Npcf_AMPolicyControl_Create or Npcf_AMPolicyControl_Update request that carries the unavailability time window information of the UE and identification information of the UE.

Step 3: The UDM/PCF1 transmits the unavailability time window information of the UE to a unified data repository (Unified Data Repository, UDR).

The UDR may store the unavailability time window information of the UE.

Optionally, the UDR checks whether a locally stored control policy has a conflict with the unavailability time window information of the UE.

As an optional implementation, if there is no conflict, the UDR records the unavailability time window information of the UE.

As another optional implementation, if there is a conflict, the UDR modifies the conflicting control policy. For example, the UDR adjusts a recommended time window for service occurrence in the conflicting control policy, and notifies an AF related to the control policy. The UDR may notify the AF through a Network Exposure Function (Network Exposure Function, NEF), or may notify the AF through PCF2 and the NEF.

As still another optional implementation, if there is a conflict, the UDR transmits a control policy conflict message to a Policy Control Function PCF2, where the control policy conflict message includes identification information of the conflicting control policy. Optionally, the control policy conflict message further includes all control policies of the UE. Optionally, the control policy conflict message further includes the unavailability time window information of the UE.

Optionally, the Policy Control Function PCF2 modifies the conflicting control policy, and the Policy Control Function PCF2 transmits the to-be-modified identification information of the control policy and an updated control policy to the NEF. The updated control policy includes updated recommended time window information for service occurrence. The NEF transmits the to-be-modified identification information of the control policy and the updated control policy to the AF.

As yet still another optional implementation, if there is a conflict, the UDR transmits a conflict feedback information to the UDM/PCF1. Optionally, the conflict feedback information further includes recommended unavailability time window information of the terminal. The UDM/PCF1 transmits the conflict feedback information to the AMF. The AMF transmits the conflict feedback information to the UE. After receiving the conflict feedback information, the UE may adjust the unavailability time window information of the UE.

In conclusion, optionally, the UDR checks whether the locally stored control policy has a conflict with the unavailability time window information of the UE. If there is no conflict, the UDR records the unavailability time window information. If there is a conflict, the UDR modifies the conflicting control policy, or transmits the control policy conflict message to the PCF2, for the PCF2 to modify the conflicting control policy, or transmits the conflict feedback information to the UDM/PCF1 to instruct the terminal to adjust the unavailability time window information.

Step 4: PCF3 transmits a first request message to the UDR, where the first request message includes identification information of the terminal.

Optionally, the Policy Control Function PCF3 transmits the first request message to the UDR, where the first request message includes the identification information of the terminal.

Optionally, the first request message further includes: unavailability time window indication information, where the unavailability time window indication information indicates querying the unavailability time window information of the terminal.

Step 5: The UDR transmits the unavailability time window information of the UE to the PCF3.

The UDR transmits the unavailability time window information of the UE to the PCF3. Then, the PCF3 receives a first request response message transmitted by the unified data repository, where the first request response message includes the unavailability time window information or availability time window information of the terminal identified by the identification information.

It needs to be noted that the PCF3 may alternatively query availability time window information of the terminal from the UDR. Correspondingly, the UDR transmits the availability time window information of the terminal to the PCF.

For example, the UDR may determine the availability time window information of the terminal based on the unavailability time window information of the terminal transmitted by the AMF. The PCF3 may alternatively determine the availability time window information of the terminal based on the received unavailability time window information of the terminal.

Step 4 and step 5 are optional.

It is to be noted that the identification information of the UE may not be in the unavailability time window information of the UE, but carried in a message. The identification information of the UE may be an explicit parameter or an implicit parameter in the message. For example, the identification information of the UE transmitted between network elements may be indicated by the connection channel corresponding to the UE between the network elements. In this case, there is no need to transmit an explicit UE identification information parameter.

For example, the UE may transmit, to the AMF, a NAS message that carries the unavailability time window information of the UE. The identification information of the UE may be indicated by a NAS connection, without carrying an explicit UE identifier. For example, the identification information of the UE may be indicated by a connection of the UE between the AMF and the UDM. The AMF transmits signaling to the UDM by using a signaling connection of UE1, indicating the information of the UE.

It needs to be noted that the foregoing Policy Control Functions PCF1, PCF2, and PCF3 may be the same PCF or may be different PCFs.

Manner 3: Transmit the first information to a User Plane Function.

For an interaction process involved in Manner 3, refer to a schematic interaction diagram 3 of a method for negotiating an unavailability period of a terminal shown in FIG. 5. As shown in FIG. 5, the method for negotiating the unavailability period of the terminal includes the following steps:
Step 1: The UE transmits the unavailability time window information of the UE to the User Plane Function (User Plane Function, UPF).
Step 2: The UPF transmits the unavailability time window information of the UE to a Session Management Function (Session Management Function, SMF).
Step 3: The SMF transmits the unavailability time window information of the UE to the UDM/PCF.

For example, the SMF transmits, to the UDM, an Nudm_SDM_Get or Nudm_SDM_Subscribe or Nudm_SDM_Get request that carries the unavailability time window information of the UE.

For example, the SMF includes the unavailability time window information of the UE in an SM Policy Association establishment or modification request. For example, the SMF transmits, to the PCF, an Npcf_SMPolicyControl_Create or Npcf_SMPolicyControl_Update request that carries the unavailability time window information of the UE.

Step 4: The UDM/PCF transmits the unavailability time window information of the UE to the UDR.

For relevant content of this step, refer to the description of step 3 in Manner 2. Details are not described herein.

Step 5: PCF3 transmits a first request message to the UDR, where the first request message includes identification information of the terminal.

For relevant content of this step, refer to the description of step 4 in Manner 2. Details are not described herein.

Step 6: The UDR transmits the unavailability time window information of the UE to the PCF3.

For relevant content of this step, refer to the description of step 5 in Manner 2. Details are not described herein.

It is to be noted that the identification information of the UE in this embodiment may not be carried in the unavailability time window information of the UE, but carried in a message. The identification information of the UE may be an explicit parameter or an implicit parameter in the message. For example, the identification information of the UE transmitted between network elements may be indicated by the connection channel corresponding to the UE between the network elements. In this case, there is no need to transmit an explicit UE identification information parameter.

For example, the UE may transmit the unavailability time window information of the UE to the UPF through a PDU session of the UE. The UPF receives the unavailability time window information of the UE through the PDU session of the UE, knowing the information of the UE.

It is to be noted that an event report to be reported to the SMF after the "unavailability time window information" is obtained may be pre-configured on the UPF. An operator of the UPF configures the event report on the UPF, or the SMF configures the event report on the UPF. For example, when the UE establishes the PDU session, the SMF may transmit a usage report rule (for example, Usage Report Rule) to the UPF, and configure the event report.

Optionally, based on one or two of indication information from the UE, subscription information of the UE, indication information from the UDM, local configuration, and a PCC rule, the SMF determines to configure the event report on the UPF.

For example, the UE may carry an unavailability information transfer indication during the establishment of the PDU session, indicating that the unavailability time window information of the UE is transferred by using the PDU session.

The unavailability information transfer indication may be at least one of the following: DNN for establishing the PDU session, S-NSSAI, a capability parameter of the UE, a request indication of the UE, or another parameter. A specific form is not limited in this embodiment.

The subscription information of the UE may also include the unavailability information transfer indication. For a form of the unavailability information transfer indication, refer to the foregoing description. Similarly, the indication information from the UDM, the local configuration of the SMF, or the obtained PCC rule may also include the unavailability information transfer indication, indicating that the unavailability time window information of the UE is transferred by using the PDU session, or indicating that the SMF needs to indicate the UPF to detect and report the unavailability time window information of the UE.

Manner 4: Transmit the first information to an Application Function.

For an interaction process involved in Manner 4, refer to a schematic interaction diagram 4 of a method for negotiating an unavailability period of a terminal shown in FIG. 6. As shown in FIG. 6, the method for negotiating the unavailability period of the terminal includes the following steps:
Step 1: The UE transmits the unavailability time window information of the UE to the Application Function (Application Function, AF).

For this step, refer to the description of step 1 in Manner 1. The AF herein may be the Data Collection AF in Manner 1 or may be another AF, for example, an AF belonging to an APP related to a UE reboot.

Step 2: The AF transmits the unavailability time window information of the UE to the NEF.

Step 3: The NEF transmits the unavailability time window information of the UE to the UDR.

Step 4 and step 5: The PCF obtains the unavailability time window information of the UE from the UDR.

For step 4 and step 5, refer to the description of step 4 and step 5 in Manner 2.

It is to be noted that the identification information of the UE in the foregoing embodiment may not be in the unavailability time window information of the UE, but carried in a message. The identification information of the UE may be an explicit parameter or an implicit parameter in the message. For example, the identification information of the UE transmitted between network elements may be indicated by the connection channel corresponding to the UE between the network elements. In this case, there is no need to transmit an explicit UE identification information parameter.

Manner 5: Transmit the first information to a Network Data Analytics Function.

Optionally, that the first information is transmitted to the Network Data Analytics Function NWDAF includes:
transmitting the first information to the Network Data Analytics Function through the Data Collection Application Function.

For the understanding of this manner, refer to the description of FIG. 3.

Manner 6: Transmit the first information to a unified data repository UDR.

Optionally, that the first information is transmitted to the unified data repository includes one of the following:
a) Transmit the first information to the unified data repository through the Access and Mobility Management Function.
   Optionally, for that the AMF transmits the first information to the UDR, refer to FIG. 4. Details are not described herein.
b) Transmit the first information to the unified data repository through the User Plane Function.
   Optionally, for that the UPF transmits the first information to the UDR, refer to FIG. 5. Details are not described herein.
c) Transmit the first information to the unified data repository through the Application Function.

Optionally, for that the AF transmits the first information to the UDR, refer to FIG. 6. Details are not described herein.

Optionally, that the terminal determines the first information includes:
determining the first information by the terminal based on at least one of the following: terminal logic, a user preference setting, and interaction information with an Application Function.

It may be understood that the UE determines the unavailability time window information of the terminal based on at least one of the UE logic, the user preference setting, and the interaction information with the AF.

**In** an optional embodiment, the method further includes:
receiving second information from the Application Function, where the second information includes recommended time window information for service occurrence, and the recommended time window information for service occurrence is determined based on the first information.

Optionally, the Application Function AF requests a control policy for service data transmission from the network-side device, the network-side device determines the control policy of the application and notifies the Application Function, and the Application Function transmits the recommended unavailability time window information of the terminal to the terminal.

**In** the embodiments of this application, through the negotiation among the terminal, the network, and the application, the conflict between service data transmission of the terminal and the unavailability period of the terminal is avoided, thereby ensuring the normal operation of network services.

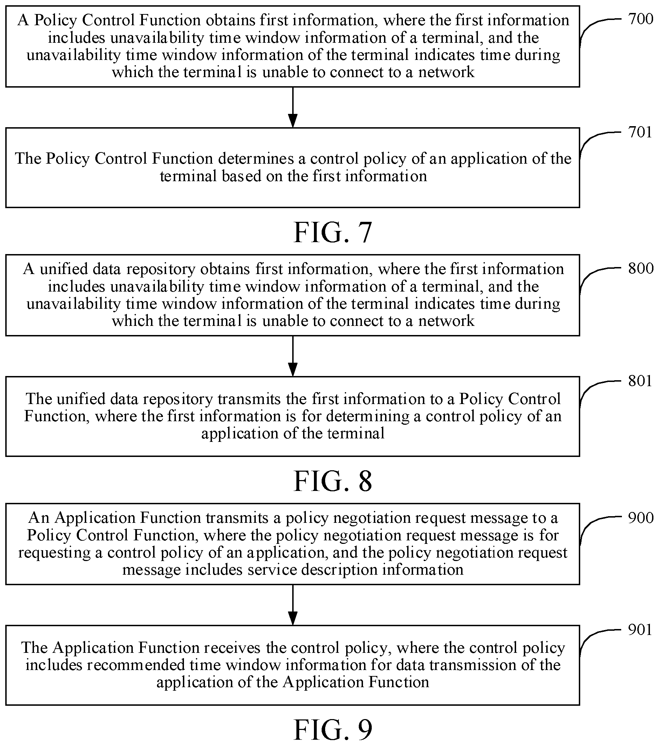

FIG. 7 is a schematic flowchart 2 of a method for negotiating an unavailability period of a terminal according to an embodiment of this application. As shown in FIG. 7, the method for negotiating the unavailability period of the terminal includes the following steps:
Step 700: A Policy Control Function obtains first information, where the first information includes unavailability time window information of the terminal, and the unavailability time window information of the terminal indicates time during which the terminal is unable to connect to a network.

For the unavailability time window information of the terminal, refer to the description of the foregoing embodiment. Details are not described herein.

Step 701: The Policy Control Function determines a control policy of an application of the terminal based on the first information.

In this embodiment of this application, the Policy Control Function obtains the unavailability time window information of the terminal, and determines the control policy of the application of the terminal based on the unavailability time window information. Through the negotiation among the terminal, the network, and the application, the conflict between service data transmission of the terminal and the unavailability period of the terminal is avoided, thereby ensuring the normal operation of network services.

Optionally, that the Policy Control Function obtains the first information includes one of the following:
a) The Policy Control Function obtains the first information from a Network Data Analytics Function.
   For that the PCF obtains the first information from the NWDAF, refer to the relevant description of FIG. 3. Details are not described herein.
b) The Policy Control Function obtains the first information from a unified data repository.
   For that the PCF obtains the first information from the UDR, refer to the relevant description of FIG. 4, FIG. 5, or FIG. 6. Details are not described herein.
c) The Policy Control Function obtains the first information from a Mobility Management Function.
   Referring to step 2 in FIG. 4, the AMF transmits the unavailability time window information of the UE to the PCF1, and then the Policy Control Function may obtain the first information from a Mobility Management Function.
d) The Policy Control Function obtains the first information from a Session Management Function.

Referring to step 3 in FIG. 5, the SMF transmits the unavailability time window information of the UE to the PCF, and the Policy Control Function may obtain the first information from the SMF.

In an optional embodiment, that the Policy Control Function obtains the first information from the Network Data Analytics Function includes:
transmitting a first request message by the Policy Control Function to the Network Data Analytics Function, where the first request message includes identification information of the terminal; and
receiving a first request response message by the Policy Control Function from the Network Data Analytics Function, where the first request response message includes the unavailability time window information or availability time window information of the terminal identified by the identification information.

Optionally, the first request message further includes: unavailability time window indication information, where the unavailability time window indication information indicates querying the unavailability time window information of the terminal.

In an optional embodiment, that the Policy Control Function obtains the first information from the unified data repository includes:
transmitting a first request message by the Policy Control Function to the unified data repository, where the first request message includes identification information of the terminal; and
receiving a first request response message by the Policy Control Function from the unified data repository, where the first request response message includes the unavailability time window information or availability time window information of the terminal identified by the identification information.

Optionally, the first request message further includes: unavailability time window indication information, where the unavailability time window indication information indicates querying the unavailability time window information of the terminal.

It needs to be noted that the PCF may alternatively query availability time window information of the terminal from the UDR. Correspondingly, the UDR transmits the availability time window information of the terminal to the PCF.

The UDR may determine the availability time window information of the terminal based on the unavailability time window information of the terminal. The PCF may alternatively determine the availability time window information of the terminal based on the received unavailability time window information of the terminal.

Optionally, that the Policy Control Function determines the control policy of the application of the terminal based on the first information in step 701 includes the following steps:

Step 7011: Obtain a first control policy of the terminal, where the first control policy is a control policy that conflicts with the unavailability time window information of the terminal.

Optionally, that the first control policy of the terminal is obtained includes:
obtaining the first control policy of the terminal from a unified data repository.

Optionally, the PCF receives a control policy conflict message from the unified data repository UDR, where the control policy conflict message includes identification information of the first control policy.

Optionally, the control policy conflict message further includes at least one of the following: all control policies of the terminal, and the unavailability time window information of the terminal.

The PCF obtains the first control policy based on the identification information of the first control policy.

Step 7012: Adjust recommended time window information for service occurrence in the first control policy based on the unavailability time window information of the terminal, and generate update information of the first control policy, where the update information of the first control policy includes adjusted recommended time window information for service occurrence and identification information of the first control policy.

For example, based on the unavailability time window information of the UE, the PCF determines the availability time window information of the UE and determines the recommended time window information for service occurrence in an availability time window.

Optionally, the method further includes:
transmitting the update information of the first control policy to an Application Function related to the first control policy.

It may be understood that the PCF adjusts, based on the unavailability time window information of the terminal, the control policy that conflicts with the unavailability time window information of the terminal, in a specific adjustment manner of adjusting the recommended time window information for service occurrence in the first control policy, and therefore generating the update information of the first control policy.

The adjusted recommended time window information for service occurrence does not conflict with the unavailability time window information of the terminal.

Optionally, the transmitting the update information of the first control policy to an Application Function related to the first control policy includes:
transmitting the update information of the first control policy to the Application Function through a Network Exposure Function.

Optionally, the unavailability time window information includes at least one of the following:
a start time point at which the terminal is unable to connect to the network and duration in which the terminal is unable to connect to the network;
a start time point and an end time point at which the terminal is unable to connect to the network; and
identification information of the terminal corresponding to the unavailability time window information.

Optionally, the control policy includes at least one of the following:
a reboot parameter, where the reboot parameter indicates whether the control policy is a service that causes a terminal reboot;
the recommended time window information for service occurrence or recommended time window information for data transmission;
an index of a charging rate;
a maximum bandwidth; and
the identification information of the terminal.

It needs to be noted that, in the embodiments of this application, the recommended time window information for service occurrence may also be referred to as recommended time window information for data transmission.

In this embodiment of this application, the Policy Control Function obtains the unavailability time window information of the terminal, and determines the control policy of the application of the terminal based on the unavailability time window information. Through the negotiation among the terminal, the network, and the application, the conflict between service data transmission of the terminal and the unavailability period of the terminal is avoided, thereby ensuring the normal operation of network services.

FIG. 8 is a schematic flowchart 3 of a method for negotiating an unavailability period of a terminal according to an embodiment of this application. The method is applied to a unified data repository UDR. As shown in FIG. 8, the method includes the following steps:
Step 800: A unified data repository obtains first information, where the first information includes unavailability time window information of the terminal, and the unavailability time window information of the terminal indicates time during which the terminal is unable to connect to a network.

For the unavailability time window information of the terminal, refer to the description of the foregoing embodiment. Details are not described herein.

Step 801: The unified data repository transmits the first information to a Policy Control Function, where the first information is for determining a control policy of an application of the terminal.

In an implementation, the UDR obtains the unavailability time window information of the terminal, and transmits the unavailability time window information of the terminal to the PCF, for the PCF to determine the control policy of the application of the terminal.

Optionally, that the unified data repository obtains the first information includes at least one of the following:
a) Obtain the first information from an Access and Mobility Management Function.
   For that the UDR obtains the first information from the AMF, refer to step 2 and step 3 in FIG. 4. Details are not described herein.
b) Obtain the first information from a Session Management Function.
   For that the UDR obtains the first information from the SMF, refer to step 3 and step 4 in FIG. 5. Details are not described herein.
c) Obtain the first information from an Application Function.

For that the UDR obtains the first information from the AF, refer to step 2 and step 3 in FIG. 6. Details are not described herein.

Optionally, that the unified data repository transmits the first information to the Policy Control Function includes:
receiving a first request message from the Policy Control Function, where the first request message includes identification information of the terminal; and
transmitting a first request response message to the Policy Control Function, where the first request response message includes the unavailability time window information or availability time window information of the terminal identified by the identification information.

It may be understood that the UDR receives the first request message transmitted by the PCF, and feeds back the unavailability time window information or availability time window information of the terminal requested by the PCF.

Optionally, the first request message further includes: unavailability time window indication information, where the unavailability time window indication information indicates querying the unavailability time window information of the terminal identified by the identification information.

It needs to be noted that the PCF may alternatively query availability time window information of the terminal from the UDR. Correspondingly, the UDR transmits the availability time window information of the terminal to the PCF.

The UDR may determine the availability time window information of the terminal based on the unavailability time window information of the terminal. The PCF may alternatively determine the availability time window information of the terminal based on the received unavailability time window information of the terminal.

In some optional embodiments, the method further includes:
determining, by the unified data repository, that a first control policy exists, where the first control policy is a control policy that conflicts with the unavailability time window information of the terminal.

It may be understood that the UDR checks whether a locally stored control policy has a conflict with the unavailability time window information of the UE. If there is a conflict, the UDR determines that the first control policy exists. If there is no conflict, the UDR records the unavailability time window information of the terminal.

When it is determined that the first control policy exists, the unified data repository performs one of the following:
adjusting, by the unified data repository, recommended time window information for service occurrence in the first control policy based on the unavailability time window information of the terminal, generating update information of the first control policy, where the update information of the first control policy includes adjusted recommended time window information for service occurrence, and transmitting the update information of the first control policy to an Application Function;
transmitting conflict feedback information by the unified data repository, where the conflict feedback information includes identification information of the first control policy; and
transmitting a control policy conflict message by the unified data repository to the Policy Control Function, where the control policy conflict message includes the identification information of the first control policy.

As an optional implementation, the UDR modifies the first control policy. For example, a recommended time window for services in the first control policy is adjusted, and an AF related to the first control policy is notified.

As another optional implementation, if there is a conflict, the UDR transmits a conflict feedback information.

Optionally, the transmitting conflict feedback information by the unified data repository includes:
transmitting the conflict feedback information by the unified data repository to the terminal, where the conflict feedback information instructs the terminal to adjust the unavailability time window information.

Optionally, the UDR transmits the conflict feedback information to the UDM/PCF1, where the conflict feedback information includes the identification information of the first control policy. Further, the UDM/PCF1 transmits the conflict feedback information to the AMF. The AMF transmits the conflict feedback information to the UE. After receiving the conflict feedback information, the UE may adjust the unavailability time window information of the UE.

Optionally, the conflict feedback information further includes: recommended unavailability time window information of the terminal.

Optionally, the recommended unavailability time window information of the terminal is determined based on the recommended time window information for service occurrence in the first control policy.

The recommended unavailability time window information of the terminal needs to avoid a conflict with the recommended time window information for service occurrence in the first control policy.

As still another optional implementation, the UDR transmits the control policy conflict message to the Policy Control Function PCF, to indicate the PCF to adjust the first control policy. The control policy conflict message includes identification information of a conflicting control policy. Optionally, the control policy conflict message further includes all control policies of the UE. Optionally, the control policy conflict message further includes the unavailability time window information of the UE.

Further, the PCF adjusts the recommended time window information for service occurrence in the first control policy, generates the update information of the first control policy, where the update information of the first control policy includes the adjusted recommended time window information for service occurrence, and transmits the update information of the first control policy to the Application Function.

The update information of the first control policy includes the identification information of the first control policy and an updated control policy. The updated control policy includes the adjusted recommended time window information for service occurrence.

Optionally, that the update information of the first control policy is transmitted to the Application Function includes one of the following:
transmitting the update information of the first control policy by the unified data repository to the Application Function through a Network Exposure Function; and
transmitting the update information of the first control policy by the unified data repository to the Application Function through the Policy Control Function and the Network Exposure Function.

In an implementation, the UDR transmits the update information of the first control policy to the NEF. Further, the NEF transmits the update information of the first control policy to the AF.

In an implementation, the UDR may notify the AF of the update information of the first control policy through the PCF and the NEF.

In this embodiment of this application, the unified data repository obtains the unavailability time window information of the terminal and transmits the unavailability time window information of the terminal to the Policy Control Function, for the PCF to determine the control policy of the application of the terminal, or the unified data repository determines the control policy of the application of the terminal based on the unavailability time window information. Through the negotiation among the terminal, the network, and the application, the conflict between service data transmission of the terminal and the unavailability period of the terminal is avoided, thereby ensuring the normal operation of network services.

FIG. 9 is a schematic flowchart 4 of a method for negotiating an unavailability period of a terminal according to an embodiment of this application. The method is applied to an Application Function AF. As shown in FIG. 9, the method includes the following steps:
Step 900: An Application Function transmits a policy negotiation request message to a Policy Control Function, where the policy negotiation request message is for requesting a control policy of an application, and the policy negotiation request message includes service description information.

It may be understood that the AF may request a control policy from the PCF.

Step 901: The Application Function receives the control policy, where the control policy includes recommended time window information for data transmission of the application of the Application Function.

Optionally, that the Application Function receives the control policy includes:
receiving update information of a first control policy by the Application Function from the Policy Control Function, to obtain the recommended time window information for data transmission.

Optionally, that the Application Function receives the control policy includes:
receiving update information of a first control policy by the Application Function from a unified data repository, to obtain the recommended time window information for data transmission.

Optionally, the service description information includes at least one of the following: reboot indication information, service importance, a service type, and service identification information, where
the reboot indication information indicates that execution of a service described by the service description information causes a terminal reboot, and the service importance is for describing whether a requirement of the service is modifiable or whether execution of the service requires avoidance of an unavailability time window of the terminal.

Optionally, the policy negotiation request message further includes at least one of the following:
a quantity of terminals involved in a service;
a bandwidth or traffic required by each terminal involved in the service;
a time window in which the service occurs; and
external identification information of a terminal involved in the service.

Optionally, that the Application Function transmits the policy negotiation request message to the Policy Control Function includes:
transmitting the policy negotiation request message by the Application Function to the Policy Control Function through a Network Exposure Function.

In an optional embodiment, the method further includes:
transmitting the recommended time window information for data transmission by the Application Function to the terminal.

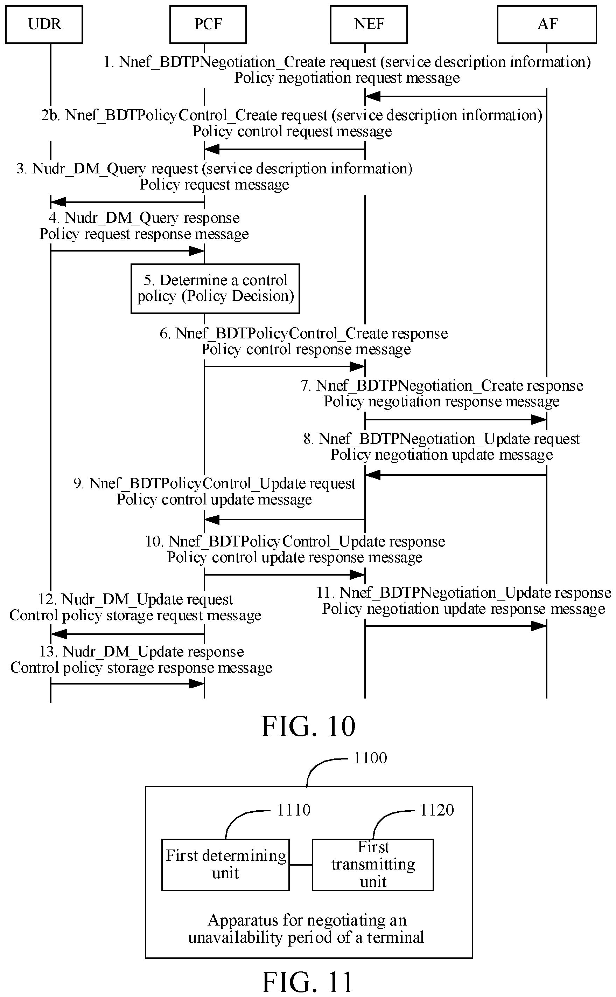

The following describes the method for negotiating the unavailability period of the terminal provided in this embodiment with reference to FIG. 10. FIG. 10 is a schematic interaction diagram 5 of a method for negotiating an unavailability period of a terminal according to an embodiment of this application. As shown in FIG. 10, the method includes the following steps:
Step 1: The AF transmits a policy negotiation request message to the NEF.

For example, the AF transmits an Nnef_BDTPNegotiation_Create message to the NEF. The message includes identification information of an application server provider (Application Server Provider, ASP).

Optionally, the message further includes service description information.

The service description information may include at least one of the following: reboot indication information, service importance, a service type, and service identification information.

The reboot indication information indicates that execution of a service described by the service description information may cause a UE reboot.

For example, the execution of the service may include transmitting service data to the UE or processing received service data by the UE.

For example, the reboot indication may be reboot indication or a service identifier of the ASP. The service identifier of the ASP indicates that the service may need a UE reboot, or the identification information of the ASP may indicate that the service may need a UE reboot.

The service importance is for describing whether a requirement of the service is modifiable or whether execution of the service requires avoidance of an unavailability time window of the terminal.

For example, the service importance may have a high, medium, or low value.

Optionally, the policy negotiation request message may further include at least one of the following:
a quantity of terminals involved in a service;
a bandwidth or traffic required by each terminal involved in the service;
a time window in which the service occurs; and
external identification information of a terminal involved in the service.

The bandwidth or traffic is required to transmit data of the service.

The time window in which the service occurs may include at least one of the following: a start time point for data transmission of the service, duration for data transmission of the service, and a time indication for requesting transmission of the service. The time indication for requesting transmission of the service indicates that the ASP does not specify a time window to transmit data of the service, but requests, from a communication network, a time window to transmit the data of the service.

The external identification information of the terminal is identification information in the ASP for identifying the UE. For example, the external identification information of the UE may include at least one of the following: an external group identifier (External Group Identifier, EGI), IMSI, SUCI, SUPI, a MAC address, GPSI, and PEI.

In this embodiment, transmitting a message may be replaced with calling a corresponding service.

Step 2: The NEF queries internal identification information of the UE from the UDM.

The internal identification information of the UE is identification information of the UE identified by the UE in 5GS. For example, an internal identifier of the UE may be one of an internal group identifier (Internal Group ID, IGI), IMSI, SUCI, SUPI, GPSI, and PEI.

The external identification information of the UE may be the same as the internal identification information of the UE.

This step is optional.

Step 2b: The NEF transmits a policy control request message to the PCF. The policy control request message is for requesting creation of a control policy.

For example, the NEF transmits an Npcf_BDTPolicyControl_Create message to the PCF. The message includes identification information of the ASP and the service description information.

Step 3: The PCF transmits a policy request message to the UDR. The policy request message is for requesting all control policies stored by the UDR.

For example, the PCF transmits an Nudr_DM_Query message to the UDR. The message carries policy data and a background data transmission parameter.

Optionally, the policy request message further includes the service description information. The policy request message is for requesting control policies of all services.

For example, when the service description information includes the reboot indication, the policy request message is for requesting a control policy for causing a service related to a UE reboot. Alternatively, the message is for requesting a control policy for a service that may cause a UE reboot.

Optionally, the policy request message further includes the identification information of the UE. The message is for requesting a control policy of a service related to the UE.

Step 4: The UDR transmits a control policy requested by the PCF to the PCF.

For example, the UDR transmits an Nudr_DM_Query response message to the PCF.

Optionally, the control policy includes a reboot parameter. The reboot parameter indicates whether the control policy is for a service that may cause a UE reboot.

Optionally, the UDR further transmits the unavailability time window information of the UE to the PCF.

Step 5: The PCF determines the control policy.

The control policy includes recommended time window information for service occurrence. Optionally, the control policy may further include at least one of the following: an index of a charging rate, a maximum bandwidth, and the identification information of the UE.

It is to be noted that the PCF may determine a plurality of control policies.

Optionally, the PCF may request the unavailability time window information of the UE from the NWDAF, to help determine the control policy. For details, refer to the step of interaction between the PCF and the NWDAF in the foregoing embodiment.

Optionally, the PCF may request the unavailability time window information of the UE from the UDR, to help determine the control policy. The PCF requests the unavailability time window information of the UE from the UDR. For details, refer to the step of interaction between the PCF and the UDR in the foregoing embodiment.

For example, the PCF may determine the recommended time window information for service occurrence based on the received unavailability time window information of the UE. For example, based on the unavailability time window information of the UE, the PCF determines the availability time window information of the UE and determines the recommended time window information for service occurrence in an availability time window.

Requesting the unavailability time window information of the UE by the PCF from the UDR may be performed instead of step 3 and step 4, or may be performed with step 3 and step 4.

Step 6: The PCF transmits a policy control response message to the NEF. The message carries the control policy.

For example, the PCF transmits an Nnef_BDTPolicyControl_Create response message to the NEF.

Step 7: The NEF transmits a policy negotiation response message to the AF. The message carries the control policy.

For example, the NEF transmits an Nnef_BDTPNegotiation_Create response message to the AF.

Step 8: The AF transmits a policy negotiation update message to the NEF, to indicate a control policy selected by the AF to the NEF.

The AF selects the control policy based on the control policy received in step 7.

For example, the AF transmits, to the NEF, an Nnef_BDTPNegotiation_Update request message that carries identification information of the control policy selected by the AF.

Step 9: The NEF transmits a policy control update message to the PCF, to indicate the control policy selected by the AF to the PCF.

For example, the NEF transmits, to the PCF, an Npcf_BDTPolicyControl_Update request message that carries the identification information of the control policy selected by the AF.

Step 10: The PCF transmits a policy control update response message to the NEF.

Step 11: The NEF transmits a policy negotiation update response message to the AF.

Step 12: The PCF transmits a control policy storage request message to the UDR, to store the negotiated control policy in the UDR.

Step 13: The UDR transmits a control policy storage response message to the PCF.

It is to be noted that, if the PCF determines only one control policy in step 5 to step 7 or transmits only one control policy to the AF, step 8 to step 11 are not performed.

Step 14: The AF transmits the unavailability time window information to the UE. The unavailability time window information includes the recommended time window information for service occurrence in the control policy received by the AF in step 7.

Optionally, the AF further transmits an unavailability indication to the UE, indicating that the transmitted unavailability time window information is a time period during which the UE can be disconnected from the network.

Step 14 is optional. (The network determines and transmits the unavailability time to the UE) The UE determines and transmits the unavailability time window to the network.

In this embodiment of this application, by requesting the control policy from the PCF, the negotiation among the terminal, the network, and the application is implemented, which can avoid the conflict between service data transmission of the terminal and the unavailability period of the terminal, thereby ensuring the normal operation of network services.

An execution body of the method for negotiating the unavailability period of the terminal provided in the embodiments of this application may be an apparatus for negotiating an unavailability period of a terminal. In an embodiment of this application, the apparatus for negotiating the unavailability period of the terminal provided in the embodiments of this application is described by using an example in which the apparatus for negotiating the unavailability period of the terminal performs the method for negotiating the unavailability period of the terminal.

FIG. 11 is a schematic diagram 1 of a structure of an apparatus for negotiating an unavailability period of a terminal according to an embodiment of this application. As shown in FIG. 11, the apparatus 1100 for negotiating the unavailability period of the terminal includes:
a first determining unit 1110, configured to determine first information, where the first information includes unavailability time window information of the terminal, and the unavailability time window information indicates time during which the terminal is unable to connect to a network; and
a first transmitting unit 1120, configured to transmit the first information to a network-side device, where the first information is for determining a control policy of an application of the terminal.

In this embodiment of this application, the terminal determines its own unavailability time window information and transmits the unavailability time window information to the network-side device, so that the network-side device can determine the control policy of the application of the terminal based on the unavailability time window information. Through the negotiation among the terminal, the network, and the application, the conflict between service data transmission of the terminal and the unavailability period of the terminal is avoided, thereby ensuring the normal operation of network services.

Optionally, that the first information is transmitted to the network-side device includes at least one of the following:
transmitting the first information to a Data Collection Application Function;
transmitting the first information to an Access and Mobility Management Function;
transmitting the first information to a User Plane Function;
transmitting the first information to an Application Function;
transmitting the first information to a Network Data Analytics Function; and
transmitting the first information to a unified data repository.

Optionally, the transmitting the first information to a Network Data Analytics Function includes:
transmitting the first information to the Network Data Analytics Function through the Data Collection Application Function.

Optionally, the transmitting the first information to a unified data repository includes one of the following:
transmitting the first information to the unified data repository through the Access and Mobility Management Function;
transmitting the first information to the unified data repository through the User Plane Function; and
transmitting the first information to the unified data repository through the Application Function.

Optionally, that the terminal determines the first information includes:
determining the first information by the terminal based on at least one of the following: terminal logic, a user preference setting, and interaction information with an Application Function.

Optionally, the unavailability time window information includes at least one of the following:
a start time point at which the terminal is unable to connect to the network and duration in which the terminal is unable to connect to the network;
a start time point at which the terminal is unable to connect to the network and an end time point at which the terminal is unable to connect to the network; and
identification information of the terminal corresponding to the unavailability time window information.

Optionally, the apparatus further includes:
a first receiving unit, configured to receive second information from the Application Function, where the second information includes recommended time window information for service occurrence, and the recommended time window information for service occurrence is determined based on the first information.

The apparatus for negotiating the unavailability period of the terminal in the embodiments of this application may be an electronic device, for example, an electronic device with an operating system, or may be a component in an electronic device, for example, an integrated circuit or chip. The electronic device may be a terminal or may be another device other than the terminal. For example, the terminal may include, but is not limited to, the listed types of the terminal 11, and the another device may be a server, a network attached storage (Network Attached Storage, NAS), or the like. This is not specifically limited in the embodiments of this application.

The apparatus for negotiating the unavailability period of the terminal provided in the embodiments of this application can implement the processes implemented in the method embodiment of FIG. 2, and achieve the same technical effects. To avoid repetition, details are not described herein again.

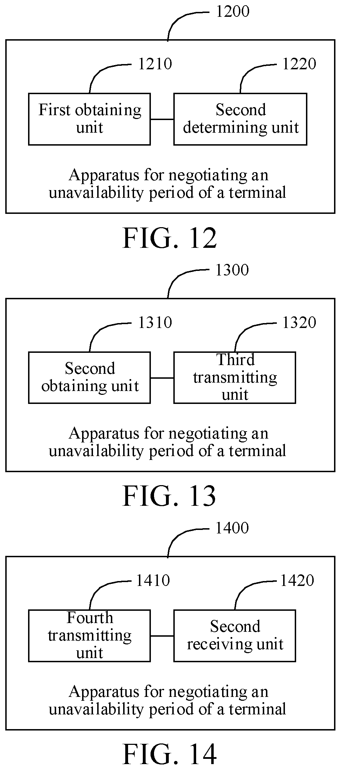

FIG. 12 is a schematic diagram 2 of a structure of an apparatus for negotiating an unavailability period of a terminal according to an embodiment of this application. As shown in FIG. 12, the apparatus 1200 for negotiating the unavailability period of the terminal includes:
a first obtaining unit 1210, configured to obtain first information, where the first information includes unavailability time window information of the terminal, and the unavailability time window information of the terminal indicates time during which the terminal is unable to connect to a network; and
a second determining unit 1220, configured to determine a control policy of an application of the terminal based on the first information.

In this embodiment of this application, the unavailability time window information of the terminal is obtained, and the control policy of the application of the terminal is determined based on the unavailability time window information. Through the negotiation among the terminal, the network, and the application, the conflict between service data transmission of the terminal and the unavailability period of the terminal is avoided, thereby ensuring the normal operation of network services.

Optionally, that the first information is obtained includes one of the following:
obtaining the first information from a Network Data Analytics Function;
obtaining the first information from a unified data repository;
obtaining the first information from a Mobility Management Function; and
obtaining the first information from a Session Management Function.

Optionally, the obtaining the first information from a Network Data Analytics Function includes:
transmitting a first request message to the Network Data Analytics Function, where the first request message includes identification information of the terminal; and
receiving a first request response message from the Network Data Analytics Function, where the first request response message includes the unavailability time window information or availability time window information of the terminal identified by the identification information.

Optionally, the obtaining the first information from a unified data repository includes:
transmitting a first request message to the unified data repository, where the first request message includes identification information of the terminal; and
receiving a first request response message from the unified data repository, where the first request response message includes the unavailability time window information or availability time window information of the terminal identified by the identification information.

Optionally, the first request message further includes: unavailability time window indication information, where the unavailability time window indication information indicates querying the unavailability time window information of the terminal.

Optionally, the second determining unit 1220 is configured to:
obtain a first control policy of the terminal, where the first control policy is a control policy that conflicts with the unavailability time window information of the terminal; and
adjust recommended time window information for service occurrence in the first control policy based on the unavailability time window information of the terminal, and generate update information of the first control policy, where the update information of the first control policy includes adjusted recommended time window information for service occurrence and identification information of the first control policy.

The apparatus further includes:
a second transmitting unit, configured to transmit the update information of the first control policy to an Application Function related to the first control policy.

Optionally, that the first control policy of the terminal is obtained includes:
obtaining the first control policy of the terminal from a unified data repository.

Optionally, the second transmitting unit is configured to:
transmit the update information of the first control policy to the Application Function through a Network Exposure Function.

Optionally, the unavailability time window information includes at least one of the following:
a start time point at which the terminal is unable to connect to the network and duration in which the terminal is unable to connect to the network;
a start time point at which the terminal is unable to connect to the network and an end time point at which the terminal is unable to connect to the network; and
identification information of the terminal corresponding to the unavailability time window information.

Optionally, the control policy includes at least one of the following:
a reboot parameter, where the reboot parameter indicates whether the control policy is a service that causes a terminal reboot;
the recommended time window information for service occurrence or recommended time window information for data transmission;
an index of a charging rate;
a maximum bandwidth; and
the identification information of the terminal.

The apparatus for negotiating the unavailability period of the terminal provided in the embodiments of this application can implement the processes implemented in the method embodiment of FIG. 7, and achieve the same technical effects. To avoid repetition, details are not described herein again.

FIG. 13 is a schematic diagram 3 of a structure of an apparatus for negotiating an unavailability period of a terminal according to an embodiment of this application. As shown in FIG. 13, the apparatus 1300 for negotiating the unavailability period of the terminal includes:
a second obtaining unit 1310, configured to obtain first information, where the first information includes unavailability time window information of the terminal, and the unavailability time window information of the terminal indicates time during which the terminal is unable to connect to a network; and
a third transmitting unit 1320, configured to transmit the first information to a Policy Control Function, where the first information is for determining a control policy of an application of the terminal.

Optionally, that the first information is obtained includes at least one of the following:
obtaining the first information from an Access and Mobility Management Function;
obtaining the first information from a Session Management Function; and
obtaining the first information from an Application Function.

Optionally, that the first information is transmitted to the Policy Control Function includes:
receiving a first request message from the Policy Control Function, where the first request message includes identification information of the terminal; and
transmitting a first request response message to the Policy Control Function, where the first request response message includes the unavailability time window information or availability time window information of the terminal identified by the identification information.

Optionally, the first request message further includes: unavailability time window indication information, where the unavailability time window indication information indicates querying the unavailability time window information of the terminal identified by the identification information.

Optionally, the apparatus further includes:
a third determining unit, configured to determine, by the unified data repository, that a first control policy exists, where the first control policy is a control policy that conflicts with the unavailability time window information of the terminal; and
a first execution unit, configured to execute one of the following:
adjusting recommended time window information for service occurrence in the first control policy based on the unavailability time window information of the terminal, generating update information of the first control policy, where the update information of the first control policy includes adjusted recommended time window information for service occurrence, and transmitting the update information of the first control policy to an Application Function;
transmitting conflict feedback information, where the conflict feedback information includes identification information of the first control policy; and
transmitting a control policy conflict message to the Policy Control Function, where the control policy conflict message includes the identification information of the first control policy.

Optionally, the transmitting the update information of the first control policy to an Application Function includes one of the following:
transmitting the update information of the first control policy to the Application Function through a Network Exposure Function; and
transmitting the update information of the first control policy to the Application Function through the Policy Control Function and the Network Exposure Function.

Optionally, the transmitting conflict feedback information includes:
transmitting the conflict feedback information to the terminal, where the conflict feedback information instructs the terminal to adjust the unavailability time window information.

Optionally, the conflict feedback information further includes: recommended unavailability time window information of the terminal.

Optionally, the recommended unavailability time window information of the terminal is determined based on the recommended time window information for service occurrence in the first control policy.

In this embodiment of this application, the unavailability time window information of the terminal is obtained and the unavailability time window information of the terminal is transmitted to the Policy Control Function, for the PCF to determine the control policy of the application of the terminal, or the unified data repository determines the control policy of the application of the terminal based on the unavailability time window information. Through the negotiation among the terminal, the network, and the application, the conflict between service data transmission of the terminal and the unavailability period of the terminal is avoided, thereby ensuring the normal operation of network services.

The apparatus for negotiating the unavailability period of the terminal provided in the embodiments of this application can implement the processes implemented in the method embodiment of FIG. 8, and achieve the same technical effects. To avoid repetition, details are not described herein again.

FIG. 14 is a schematic diagram 4 of a structure of an apparatus for negotiating an unavailability period of a terminal according to an embodiment of this application. As shown in FIG. 14, the apparatus 1400 for negotiating the unavailability period of the terminal includes:
a fourth transmitting unit 1410, configured to transmit a policy negotiation request message to a Policy Control Function, where the policy negotiation request message is for requesting a control policy of an application, and the policy negotiation request message includes service description information; and
a second receiving unit 1420, configured to receive the control policy, where the control policy includes recommended time window information for data transmission of the application of the Application Function.

In this embodiment of this application, by requesting the control policy from the PCF, the negotiation among the terminal, the network, and the application is implemented, which can avoid the conflict between service data transmission of the terminal and the unavailability period of the terminal, thereby ensuring the normal operation of network services.

Optionally, that the control policy is received includes:
receiving update information of a first control policy from the Policy Control Function, to obtain the recommended time window information for data transmission.

Optionally, that the control policy is received includes:
receiving update information of a first control policy from a unified data repository, to obtain the recommended time window information for data transmission.

Optionally, the service description information includes at least one of the following: reboot indication information, service importance, a service type, and service identification information, where
the reboot indication information indicates that execution of a service described by the service description information causes a terminal reboot, and the service importance is for describing whether a requirement of the service is modifiable or whether execution of the service requires avoidance of an unavailability time window of the terminal.

Optionally, the policy negotiation request message further includes at least one of the following:
a quantity of terminals involved in a service;
a bandwidth or traffic required by each terminal involved in the service;
a time window in which the service occurs; and
external identification information of a terminal involved in the service.

Optionally, that the policy negotiation request message is transmitted to the Policy Control Function includes:
transmitting the policy negotiation request message to the Policy Control Function through a Network Exposure Function.

Optionally, the apparatus further includes:
a fifth transmitting unit, configured to transmit the recommended time window information for data transmission to the terminal.

The apparatus for negotiating the unavailability period of the terminal provided in the embodiments of this application can implement the processes implemented in the method embodiment of FIG. 9, and achieve the same technical effects. To avoid repetition, details are not described herein again.

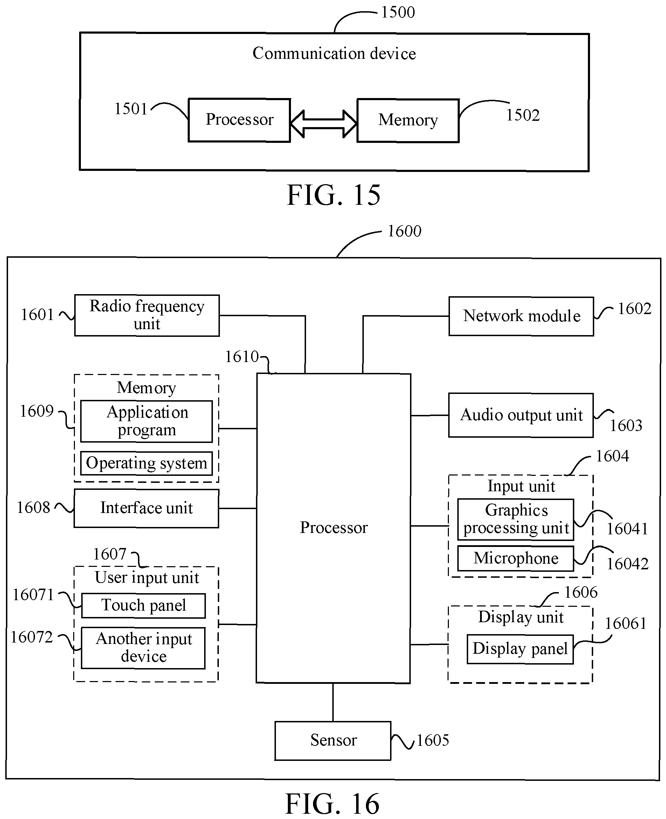

Optionally, as shown in FIG. 15, an embodiment of this application further provides a communication device 1500, including a processor 1501 and a memory 1502. The memory 1502 stores a program or instructions capable of running on the processor 1501. For example, when the communication device 1500 is a terminal, the program or instructions are executed by the processor 1501 to implement steps of the embodiments of the method for negotiating the unavailability period of the terminal, and the same technical effects can be achieved. When the communication device 1500 is a network-side device, the program or instructions are executed by the processor 1501 to implement steps of the embodiments of the method for negotiating the unavailability period of the terminal, and the same technical effects can be achieved. To avoid repetition, details are not described herein again.

An embodiment of this application further provides a terminal, including a processor and a communication interface. The processor is configured to determine first information, where the first information includes unavailability time window information of the terminal, and the unavailability time window information indicates time during which the terminal is unable to connect to a network. The communication interface is configured to transmit the first information to a network-side device, where the first information is for determining a control policy of an application of the terminal. This terminal embodiment corresponds to the foregoing method embodiment on the terminal side. The implementation processes and implementations of the method embodiment may be applied in this terminal embodiment, and the same technical effects can be achieved. Specifically, FIG. 16 is a schematic diagram of a hardware structure of a terminal according to an embodiment of this application.

The terminal 1600 includes, but is not limited to: at least some of components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

A person skilled in the art may understand that the terminal 1600 may further include a power supply (for example, a battery) for supplying power to the components. The power supply may be logically connected to the processor 1610 through a power management system, to implement functions such as charging, discharging, and power consumption management through the power management system. The terminal structure shown in FIG. 16 does not constitute a limitation on the terminal, and the terminal may include more or fewer components shown in the figure, or combine some components, or have different component arrangements. Details are not described herein again.

It should be understood that, in the embodiments of this application, the input unit 1604 may include a graphics processing unit (Graphics Processing Unit, GPU) 16041 and a microphone 16042, and the graphics processing unit 16041 processes image data of static images or videos obtained by an image capture apparatus (for example, a camera) in a video capture mode or an image capture mode. The display unit 1606 may include a display panel 16061, and the display panel 16061 may be configured in the form of a liquid crystal display, an organic light-emitting diode, or the like. The user input unit 1607 includes at least one of a touch panel 16071 and another input device 16072. The touch panel 16071 is also referred to as a touchscreen. The touch panel 16071 may include two parts: a touch detection apparatus and a touch controller. The another input device 16072 may include, but is not limited to, a physical keyboard, a function key (such as a volume control key or a switch key), a track ball, a mouse, and a joystick. Details are not described herein again.

In the embodiments of this application, the radio frequency unit 1601 receives downlink data from a network-side device, and then transmits the downlink data to the processor 1610 for processing. In addition, the radio frequency unit 1601 may transmit uplink data to the network-side device. Usually, the radio frequency unit 1601 includes, but is not limited to, an antenna, an amplifier, a transceiver, a coupler, a low noise amplifier, a duplexer, and the like.

The memory 1609 may be configured to store a software program or instructions and various data. The memory 1609 may mainly include a first storage area storing a program or instructions and a second storage area storing data. The first storage area may store an operating system, an application program or instructions required by at least one function (such as a sound playing function and an image displaying function), and the like. In addition, the memory 1609 may include a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1609 in the embodiments of this application includes, but is not limited to, these memories and any other suitable types of memories.

The processor 1610 may include one or more processing units. Optionally, the processor 1610 may integrate an application processor and a modem processor. The application processor mainly processes an operating system, a user interface, an application program, and other operations. The modem processor mainly processes a wireless communication signal, for example, a baseband processor. It may be understood that the modem processor may not be integrated into the processor 1610.

The processor 1610 is configured to determine first information, where the first information includes unavailability time window information of the terminal, and the unavailability time window information indicates time during which the terminal is unable to connect to a network.

The radio frequency unit 1601 is configured to transmit the first information to a network-side device, where the first information is for determining a control policy of an application of the terminal.

In this embodiment of this application, the terminal determines its own unavailability time window information and transmits the unavailability time window information to the network-side device, so that the network-side device can determine the control policy of the application of the terminal based on the unavailability time window information. Through the negotiation among the terminal, the network, and the application, the conflict between service data transmission of the terminal and the unavailability period of the terminal is avoided, thereby ensuring the normal operation of network services.

Optionally, the radio frequency unit 1601 is configured to perform at least one of the following:
transmitting the first information to a Data Collection Application Function;
transmitting the first information to an Access and Mobility Management Function;
transmitting the first information to a User Plane Function;
transmitting the first information to an Application Function;
transmitting the first information to a Network Data Analytics Function; and
transmitting the first information to a unified data repository.

Optionally, the transmitting the first information to a Network Data Analytics Function includes:
transmitting the first information to the Network Data Analytics Function through the Data Collection Application Function.

Optionally, the transmitting the first information to a unified data repository includes one of the following:
transmitting the first information to the unified data repository through the Access and Mobility Management Function;
transmitting the first information to the unified data repository through the User Plane Function; and
transmitting the first information to the unified data repository through the Application Function.

Optionally, the processor 1610 is configured to:
determine the first information based on at least one of the following: terminal logic, a user preference setting, and interaction information with an Application Function.

Optionally, the unavailability time window information includes at least one of the following:
a start time point at which the terminal is unable to connect to the network and duration in which the terminal is unable to connect to the network;
a start time point at which the terminal is unable to connect to the network and an end time point at which the terminal is unable to connect to the network; and
identification information of the terminal corresponding to the unavailability time window information.

Optionally, the radio frequency unit 1601 is further configured to:
receive second information from the Application Function, where the second information includes recommended time window information for service occurrence, and the recommended time window information for service occurrence is determined based on the first information.

An embodiment of this application further provides a network-side device, including a processor and a communication interface. The communication interface is configured to obtain first information, where the first information includes unavailability time window information of the terminal, and the unavailability time window information of the terminal indicates time during which the terminal is unable to connect to a network. The processor is configured to determine a control policy of an application of the terminal based on the first information.

Alternatively, the communication interface is configured to obtain first information, where the first information includes unavailability time window information of the terminal, and the unavailability time window information of the terminal indicates time during which the terminal is unable to connect to a network. The communication interface is further configured to transmit the first information to a Policy Control Function, where the first information is for determining a control policy of an application of the terminal.

Alternatively, the communication interface is configured to transmit a policy negotiation request message to a Policy Control Function, where the policy negotiation request message is for requesting a control policy of an application, and the policy negotiation request message includes service description information. The communication interface is further configured to receive the control policy, where the control policy includes recommended time window information for data transmission of the application of the Application Function.

This network-side device embodiment corresponds to the foregoing method embodiment of the network-side device. The implementation processes and implementations of the method embodiment may be applied in this network-side device embodiment, and the same technical effects can be achieved.

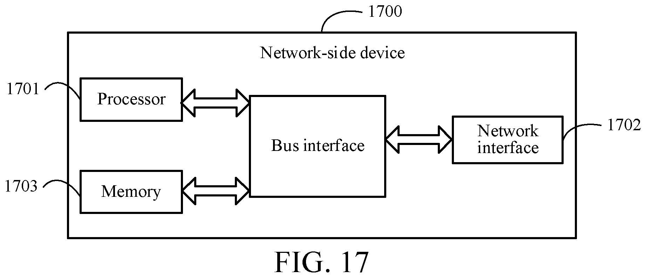

Specifically, an embodiment of this application further provides a network-side device. As shown in FIG. 17, the network-side device 1700 includes: a processor 1701, a network interface 1702, and a memory 1703. The network interface 1702 is, for example, a common public radio interface (common public radio interface, CPRI).

Specifically, the network-side device 1700 in this embodiment of the present invention further includes: a program or instructions that are capable of running on the processor 1701 and that are stored in the memory 1703. The processor 1701 calls the program or instructions in the memory 1703 to perform the method performed by the modules shown in FIG. 12 or FIG. 13 or FIG. 14, and the same technical effects are achieved. To avoid repetition, details are not described herein again.

An embodiment of this application further provides a readable storage medium. The readable storage medium stores a program or instructions. The program or instructions are executed by a processor to implement the processes of the embodiments of the method for negotiating the unavailability period of the terminal, and the same technical effects can be achieved. To avoid repetition, details are not described herein again.

The processor is the processor in the terminal in the foregoing embodiment. The readable storage medium includes a computer-readable storage medium, such as a computer read-only memory ROM, a random access memory RAM, a magnetic disk, or an optical disc.

An embodiment of this application provides a chip. The chip includes a processor and a communication interface. The communication interface is coupled to the processor. The processor is configured to run a program or instructions to implement the processes of the embodiments of the method for negotiating the unavailability period of the terminal, and the same technical effects can be achieved. To avoid repetition, details are not described herein again.

It should be understood that the chip provided in this embodiment of this application may also be referred to as a system-level chip, a system chip, a chip system, or a system on chip.

An embodiment of this application provides a computer program/program product. The computer program/program product is stored in a storage medium. The computer program/program product is executed by at least one processor to implement the processes of the embodiments of the method for negotiating the unavailability period of the terminal, and the same technical effects can be achieved. To avoid repetition, details are not described herein again.

An embodiment of this application further provides a communication system, including: a terminal and a network-side device. The terminal may be configured to perform steps of the method for negotiating the unavailability period of the terminal. The network-side device may be configured to perform steps of the method for negotiating the unavailability period of the terminal.

It needs to be noted that, in this specification, the term "include", "comprise", or any other variant thereof is intended to cover a non-exclusive inclusion, so that a process, a method, an object, or an apparatus that includes a series of elements not only includes such elements, but also includes other elements not expressly listed, or further includes elements inherent to such process, method, object, or apparatus. If no more limitations are made, an element limited by "include a/an..." does not exclude other same elements existing in the process, method, object, or apparatus that includes the element. In addition, it needs to be noted that the scope of the method and apparatus in the implementations of this application is not limited to performing functions in the shown or discussed order, and may further include performing functions in a substantially simultaneous manner or in reverse order based on the involved functions. For example, the described method may be performed in an order different from the described order, and various steps may be added, omitted, or combined. In addition, the features described in some examples may be combined in other examples.

According to the descriptions in the foregoing implementations, a person skilled in the art may clearly learn that the method according to the foregoing embodiments may be implemented by software with a necessary general-purpose hardware platform, or certainly by hardware, but the former is the preferred implementation in many cases. Based on such an understanding, the technical solutions of this application essentially or the part contributing to the related art may be presented in the form of a computer software product. The computer software product is stored in a storage medium (such as a ROM/RAM, a magnetic disk, or an optical disc), including several instructions to enable a terminal (which may be a mobile phone, a computer, a server, an air-conditioner, a network device, or the like) to perform the methods in the embodiments of this application.

The embodiments of this application are described above with reference to the accompanying drawings, but this application is not limited to the foregoing specific implementations. The foregoing specific implementations are merely examples rather than limitations. Under the inspiration of this application, a person of ordinary skill in the art may also make many forms without departing from the purpose of this application and the protection scope of the claims, which are all within the protection scope of this application.

## Claims

1. A method for negotiating an unavailability period of a terminal, comprising:
determining first information by the terminal, wherein the first information comprises unavailability time window information of the terminal, and the unavailability time window information indicates time during which the terminal is unable to connect to a network; and
transmitting the first information by the terminal to a network-side device, wherein the first information is for determining a control policy of an application of the terminal.

2. The method according to claim 1, wherein the transmitting the first information by the terminal to a network-side device comprises at least one of the following:
transmitting the first information to a Data Collection Application Function;
transmitting the first information to an Access and Mobility Management Function;
transmitting the first information to a User Plane Function;
transmitting the first information to an Application Function;
transmitting the first information to a Network Data Analytics Function; and
transmitting the first information to a unified data repository.

3. The method according to claim 2, wherein the transmitting the first information to a Network Data Analytics Function comprises:
transmitting the first information to the Network Data Analytics Function through the Data Collection Application Function.

4. The method according to claim 2, wherein the transmitting the first information to a unified data repository comprises one of the following:
transmitting the first information to the unified data repository through the Access and Mobility Management Function;
transmitting the first information to the unified data repository through the User Plane Function; and
transmitting the first information to the unified data repository through the Application Function.

5. The method according to claim 1, wherein the determining first information by the terminal comprises:
determining the first information by the terminal based on at least one of the following: terminal logic, a user preference setting, and interaction information with an Application Function.

6. The method according to any one of claims 1 to 5, wherein the unavailability time window information comprises at least one of the following:
a start time point at which the terminal is unable to connect to the network and duration in which the terminal is unable to connect to the network;
a start time point at which the terminal is unable to connect to the network and an end time point at which the terminal is unable to connect to the network; and
identification information of the terminal corresponding to the unavailability time window information.

7. The method according to any one of claims 1 to 6, wherein the method further comprises:
receiving second information from the Application Function, wherein the second information comprises recommended time window information for service occurrence, and the recommended time window information for service occurrence is determined based on the first information.

8. A method for negotiating an unavailability period of a terminal, comprising:
obtaining first information by a Policy Control Function, wherein the first information comprises unavailability time window information of the terminal, and the unavailability time window information of the terminal indicates time during which the terminal is unable to connect to a network; and
determining a control policy of an application of the terminal by the Policy Control Function based on the first information.

9. The method according to claim 8, wherein the obtaining first information by a Policy Control Function comprises one of the following:
obtaining the first information by the Policy Control Function from a Network Data Analytics Function;
obtaining the first information by the Policy Control Function from a unified data repository;
obtaining the first information by the Policy Control Function from a Mobility Management Function; and
obtaining the first information by the Policy Control Function from a Session Management Function.

10. The method according to claim 9, wherein the obtaining the first information by the Policy Control Function from a Network Data Analytics Function comprises:
transmitting a first request message by the Policy Control Function to the Network Data Analytics Function, wherein the first request message comprises identification information of the terminal; and
receiving a first request response message by the Policy Control Function from the Network Data Analytics Function, wherein the first request response message comprises the unavailability time window information or availability time window information of the terminal identified by the identification information.

11. The method according to claim 9, wherein the obtaining the first information by the Policy Control Function from a unified data repository comprises:
transmitting a first request message by the Policy Control Function to the unified data repository, wherein the first request message comprises identification information of the terminal; and
receiving a first request response message by the Policy Control Function from the unified data repository, wherein the first request response message comprises the unavailability time window information or availability time window information of the terminal identified by the identification information.

12. The method according to claim 10 or 11, wherein the first request message further comprises: unavailability time window indication information, wherein the unavailability time window indication information indicates querying the unavailability time window information of the terminal.

13. The method according to claim 8, wherein the determining a control policy of an application of the terminal by the Policy Control Function based on the first information comprises:
obtaining a first control policy of the terminal, wherein the first control policy is a control policy that conflicts with the unavailability time window information of the terminal; and
adjusting recommended time window information for service occurrence in the first control policy based on the unavailability time window information of the terminal, and generating update information of the first control policy, wherein the update information of the first control policy comprises adjusted recommended time window information for service occurrence and identification information of the first control policy; and
the method further comprises:
transmitting the update information of the first control policy to an Application Function related to the first control policy.

14. The method according to claim 13, wherein the obtaining a first control policy of the terminal comprises:
obtaining the first control policy of the terminal from a unified data repository.

15. The method according to claim 13, wherein the transmitting the update information of the first control policy to an Application Function related to the first control policy comprises:
transmitting the update information of the first control policy to the Application Function through a Network Exposure Function.

16. The method according to any one of claims 8 to 15, wherein the unavailability time window information comprises at least one of the following:
a start time point at which the terminal is unable to connect to the network and duration in which the terminal is unable to connect to the network;
a start time point at which the terminal is unable to connect to the network and an end time point at which the terminal is unable to connect to the network; and
identification information of the terminal corresponding to the unavailability time window information.

17. The method according to any one of claims 8 to 16, wherein the control policy comprises at least one of the following:
a reboot parameter, wherein the reboot parameter indicates whether the control policy is a service that causes a terminal reboot;
recommended time window information for service occurrence or recommended time window information for data transmission;
an index of a charging rate;
a maximum bandwidth; and
identification information of the terminal.

18. A method for negotiating an unavailability period of a terminal, comprising:
obtaining first information by a unified data repository, wherein the first information comprises unavailability time window information of the terminal, and the unavailability time window information of the terminal indicates time during which the terminal is unable to connect to a network; and
transmitting the first information by the unified data repository to a Policy Control Function, wherein the first information is for determining a control policy of an application of the terminal.

19. The method according to claim 18, wherein the obtaining first information by a unified data repository comprises at least one of the following:
obtaining the first information from an Access and Mobility Management Function;
obtaining the first information from a Session Management Function; and
obtaining the first information from an Application Function.

20. The method according to claim 18, wherein the transmitting the first information by the unified data repository to a Policy Control Function comprises:
receiving a first request message from the Policy Control Function, wherein the first request message comprises identification information of the terminal; and
transmitting a first request response message to the Policy Control Function, wherein the first request response message comprises the unavailability time window information or availability time window information of the terminal identified by the identification information.

21. The method according to claim 20, wherein the first request message further comprises: unavailability time window indication information, wherein the unavailability time window indication information indicates querying the unavailability time window information of the terminal identified by the identification information.

22. The method according to claim 18, wherein the method further comprises:
determining, by the unified data repository, that a first control policy exists, wherein the first control policy is a control policy that conflicts with the unavailability time window information of the terminal; and
performing, by the unified data repository, one of the following:
adjusting, by the unified data repository, recommended time window information for service occurrence in the first control policy based on the unavailability time window information of the terminal, generating update information of the first control policy, wherein the update information of the first control policy comprises adjusted recommended time window information for service occurrence, and transmitting the update information of the first control policy to an Application Function;
transmitting conflict feedback information by the unified data repository, wherein the conflict feedback information comprises identification information of the first control policy; and
transmitting a control policy conflict message by the unified data repository to the Policy Control Function, wherein the control policy conflict message comprises the identification information of the first control policy.

23. The method according to claim 22, wherein the transmitting the update information of the first control policy to an Application Function comprises one of the following:
transmitting the update information of the first control policy by the unified data repository to the Application Function through a Network Exposure Function; and
transmitting the update information of the first control policy by the unified data repository to the Application Function through the Policy Control Function and the Network Exposure Function.

24. The method according to claim 22, wherein the transmitting conflict feedback information by the unified data repository comprises:
transmitting the conflict feedback information by the unified data repository to the terminal, wherein the conflict feedback information instructs the terminal to adjust the unavailability time window information.

25. The method according to claim 24, wherein the conflict feedback information further comprises: recommended unavailability time window information of the terminal.

26. The method according to claim 25, wherein the recommended unavailability time window information of the terminal is determined based on the recommended time window information for service occurrence in the first control policy.

27. A method for negotiating an unavailability period of a terminal, comprising:
transmitting a policy negotiation request message by an Application Function to a Policy Control Function, wherein the policy negotiation request message is for requesting a control policy of an application, and the policy negotiation request message comprises service description information; and
receiving the control policy by the Application Function, wherein the control policy comprises recommended time window information for data transmission of the application of the Application Function.

28. The method according to claim 27, wherein the receiving the control policy by the Application Function comprises:
receiving update information of a first control policy by the Application Function from the Policy Control Function, to obtain the recommended time window information for data transmission.

29. The method according to claim 27, wherein the receiving the control policy by the Application Function comprises:
receiving update information of a first control policy by the Application Function from a unified data repository, to obtain the recommended time window information for data transmission.

30. The method according to claim 27, wherein the service description information comprises at least one of the following: reboot indication information, service importance, a service type, and service identification information, wherein
the reboot indication information indicates that execution of a service described by the service description information causes a terminal reboot, and the service importance is for describing whether a requirement of the service is modifiable or whether execution of the service requires avoidance of an unavailability time window of the terminal.

31. The method according to claim 27, wherein the policy negotiation request message further comprises at least one of the following:
a quantity of terminals involved in a service;
a bandwidth or traffic required by each terminal involved in the service;
a time window in which the service occurs; and
external identification information of a terminal involved in the service.

32. The method according to claim 27, wherein the transmitting a policy negotiation request message by an Application Function to a Policy Control Function comprises:
transmitting the policy negotiation request message by the Application Function to the Policy Control Function through a Network Exposure Function.

33. The method according to claim 27, wherein the method further comprises:
transmitting the recommended time window information for data transmission by the Application Function to the terminal.

34. An apparatus for negotiating an unavailability period of a terminal, comprising:
a first determining unit, configured to determine first information, wherein the first information comprises unavailability time window information of the terminal, and the unavailability time window information indicates time during which the terminal is unable to connect to a network; and
a first transmitting unit, configured to transmit the first information to a network-side device, wherein the first information is for determining a control policy of an application of the terminal.

35. An apparatus for negotiating an unavailability period of a terminal, comprising:
a first obtaining unit, configured to obtain first information, wherein the first information comprises unavailability time window information of the terminal, and the unavailability time window information of the terminal indicates time during which the terminal is unable to connect to a network; and
a second determining unit, configured to determine a control policy of an application of the terminal based on the first information.

36. An apparatus for negotiating an unavailability period of a terminal, comprising:
a second obtaining unit, configured to obtain first information, wherein the first information comprises unavailability time window information of the terminal, and the unavailability time window information of the terminal indicates time during which the terminal is unable to connect to a network; and
a third transmitting unit, configured to transmit the first information to a Policy Control Function, wherein the first information is for determining a control policy of an application of the terminal.

37. An apparatus for negotiating an unavailability period of a terminal, comprising:
a fourth transmitting unit, configured to transmit a policy negotiation request message to a Policy Control Function, wherein the policy negotiation request message is for requesting a control policy of an application, and the policy negotiation request message comprises service description information; and
a second receiving unit, configured to receive the control policy, wherein the control policy comprises recommended time window information for data transmission of the application of the Application Function.

38. A terminal, comprising a processor and a memory, wherein the memory stores a program or instructions capable of running on the processor, and the program or instructions are executed by the processor to implement steps of the method for negotiating the unavailability period of the terminal according to any one of claims 1 to 7.

39. A network-side device, comprising a processor and a memory, wherein the memory stores a program or instructions capable of running on the processor, and the program or instructions are executed by the processor to implement steps of the method for negotiating the unavailability period of the terminal according to any one of claims 8 to 17, or to implement steps of the method for negotiating the unavailability period of the terminal according to any one of claims 18 to 26, or to implement steps of the method for negotiating the unavailability period of the terminal according to any one of claims 27 to 33.

40. A readable storage medium, wherein the readable storage medium stores a program or instructions, and the program or instructions are executed by a processor to implement steps of the method for negotiating the unavailability period of the terminal according to any one of claims 1 to 7, or to implement steps of the method for negotiating the unavailability period of the terminal according to any one of claims 8 to 17, or to implement steps of the method for negotiating the unavailability period of the terminal according to any one of claims 18 to 26, or to implement steps of the method for negotiating the unavailability period of the terminal according to any one of claims 27 to 33.
